# EUROPÄISCHE PATENTSCHRIFT

(11) **EP 2 548 089 B1**
(45) Veröffentlichungstag und Bekanntmachung des Hinweises auf die Patenterteilung: **05.05.2021**
(21) Anmeldenummer: 11708505.0
(22) Anmeldetag: 18.03.2011
(51) Int. Cl.: G05D 16/20

(54) **DRUCKREGLER ZUR ZUFÜHRUNG VON KRAFTSTOFF UND KRAFTSTOFFVERSORGUNGSSYSTEM MIT EINER REGELEINHEIT AUFWEISEND DIESEN DRUCKREGLER**
PRESSURE REGULATORS FOR FEEDING FUEL, AND FUEL-SUPPLYING SYSTEM COMPRISING A REGULATING UNIT THAT CONSISTS OF SAID PRESSURE REGULATORS
RÉGULATEURS DE PRESSION POUR L'AMENÉE DE CARBURANT ET SYSTÈME D'ALIMENTATION EN CARBURANT MUNI D'UNE UNITÉ DE RÉGULATION CONSTITUÉE DESDITS RÉGULATEURS DE PRESSION

(30) Priorität: 18.03.2010 DE 102010003016
(43) Veröffentlichungstag der Anmeldung: 23.01.2013
(73) Patentinhaber: HypTec GmbH, 8403 Lebring (AT)
(72) Erfinder: ZIEGER, Andreas, A-8321 Hofstätten an der Raab (AT); HÖLLER, Thomas, A-8403 Lebring (AT)
(74) Vertreter: Lang, Johannes
(86) Internationale Anmeldenummer: PCT/EP2011/054099
(87) Internationale Veröffentlichungsnummer: WO 2011/113922

(56) Entgegenhaltungen:
- DE-A1- 2 937 978
- DE-A1- 4 016 140
- DE-A1-102005 022 693
- DE-A1-102007 039 925
- FR-A1- 2 905 773
- GB-A- 2 129 170
- JP-A- 2001 066 020
- US-A- 5 048 790
- US-A1- 2005 217 734

## Beschreibung

Die vorliegende Erfindung betrifft eine Kraftstoffversorgungsanlage und einen Druckregler für eine Kraftstoffversorgungsanlage zum Zuführen eines Kraftstoffes von einem Speicher zu einem Verbraucher, und ein Verfahren zur Druckregelung.

Alternative gasförmige Energieträger wie Erdgas, Methan, Biogas und Wasserstoff gewinnen im Verkehrswesen aufgrund ihres CO₂-Einspapotentials und aus Gründen der Versorgungssicherheit zunehmend an Bedeutung. Diese Energieträger werden zur Erzielung der geforderten Reichweiten typischerweise in komprimierter Form in Druckzylindern bei Nenndrücken von bis zu 700 bar gespeichert und dem Verbraucher bei einem Arbeitsdruck von ca. 10 bar zur Verfügung gestellt.

Der Druckregler hat die Aufgabe, das gespeicherte Gas vom Speicherdruck auf einen vorgegebenen, meist von den Betriebsbedingungen des Fahrzeuges abhängigen Arbeitsruck zu reduzieren und ist somit ein wesentliches Element eines Kraftstoffversorgungssystems.

Dem Fachmann sind unterschiedliche Ausführungsformen für Druckregler bekannt:
Aus US 7 159 611 ist ein mechanischer Einstufen-Druckregler nach dem Stand der Technik bekannt: Mit einer mechanischen Druckreduziereinheit wird der Speicherdruck auf den Arbeitsdruck herabgesetzt, wobei der Arbeitsdruck durch die einstufige mechanische Bauart in weiten Grenzen schwankt und im Betrieb unveränderbar eingestellt ist.

Aus DE 600 21 694 ist ein mechanischen Zweistufen-Druckregler nach dem Stand der Technik bekannt: Mit zwei mechanischen und hintereinander angeordneten Druckreduziereinheiten wird der Speicherdruck auf den Arbeitsdruck herabgesetzt, wobei der Arbeitsdruck durch die zweistufige mechanische Bauart im Betrieb unveränderbar eingestellt ist und der Druckregler ausladend baut.

Aus DE 102 04 746 ist ein elektromechanischer Einstufen-Druckregler nach dem Stand der Technik bekannt: Mit einer, von einer Magnetspule unterstützten, einstufigen mechanischen Druckreduziereinheit wird der Speicherdruck auf den Arbeitsdruck herabgesetzt, wobei der Arbeitsdruck durch die einstufige kombinierte Bauart im Betrieb nur innerhalb eines durch die Magnetkraft festgelegten engen Bereich verstellt werden kann.

Aus DE 10 2008 034 581 ist ein elektromechanischer Zweistufen-Druckregler nach dem Stand der Technik bekannt: Mit einer mechanischen Druckreduziereinheit und einem nachfolgendem elektronischen Proportionalventil wird der Speicherdruck auf den Arbeitsdruck herabgesetzt, wobei durch die zweistufige kombinierte Bauart ein ausladender und komplexer Bauteil entsteht.

DE 29 37 978 A1 offenbart einen Gasdruckregler mit einem Druckmesser, der in Abhängigkeit von dem Verhältnis von Soll- zu Istwert des Gasraumdrucks Magnetventile zu den Druckausgleichsauslässen steuert.

JP 2001/066020 A offenbart ein elektromagnetisches Strömungssteuerventil für Klimaanlagen, die unterschiedliche optimale Strömungsgeschwindigkeiten eines Kühlmittels aufweisen ohne dabei grundlegende Spezifikationen für die Strömungsgeschwindigkeitseigenschaften zu modifizieren.

DE 10 2007 039 925 A1 offenbart einen Druckregler, wobei mehrere Ventilstufen verwendet werden, um geringe Durchflüsse zu bedienen und um ein Dämpfungsverhältnis des Reglers zu maximieren.

US 5,048,790 zeigt ein selbst modulierendes Regelventil. Bei dem Regelventil wird eine Scheibenanordnung durch verschiedene Druckkammern angehoben um das Ventil zu öffnen.

US 2005/0217734 A1 zeigt ein elektromagnetisches Ventil. Das elektromagnetische Ventil verbindet ein Kraftstofftank mit einem Kanister. Wenn eine Spule betätigt wird, dann wird ein erster Ventilkörper 50 angehoben und eine Fluidpassage zwischen Kraftstofftank und Kanister geöffnet. Sobald eine Druckdifferenz zwischen dem Tank und dem Kanister abfällt, fällt auch die Anziehungskraft eines zweiten Ventilkörper in Richtung eines zweiten Ventilsitzes ab. Durch eine Feder wird dann der zweite Ventilkörper in Richtung des ersten Ventilkörpers 50 gedrückt, wodurch eine größere Öffnung freigegeben wird. Bei den unterschiedlichen Druckreglern nach dem Stand der Technik ist ein Strömungsweg zwischen dem eingangsseitigen Hochdruckraum und dem ausgangsseitigen Niederdruckraum ausgeführt, wobei bei einstufigen Druckreglern eine Verschlusseinheit und bei zwei- bzw. mehrstufigen Druckreglern zwei- bzw. mehrerer hintereinander angeordnete Verschlusseinheiten in dem einen Strömungsweg zwischen dem eingangsseitigen Hochdruckraum und dem ausgangsseitigen Niederdruckraum ausgeführt sind und den Strömungsweg in geeigneter Weise öffnen und verschließen.

Die Erfindung vermeidet die Nachteile des Standes der Technik und schafft einen Druckregler für beliebige Eingangsdrücke in kompakter und einfacher Bauweise, der bei geringem Leistungsbedarf im Betrieb mit hoher Regelgenauigkeit einen in weiten Grenzen entsprechend einem Steuersignal variablen Ausgangsdruck bereitstellt und folgende Vorteile aufweist:
- kompakte Bauform durch gewähltes Funktionsprinzip
- hohe Anpassungsfähigkeit durch elektronischer Ansteuerung
- hohe innere Dichtheit durch große Druckfläche und Rückstellfeder
- Entfall eines Systemabsperrventils durch hohe innere Dichtheit
- stromlos geschlossen durch den Behälterdruck
- hohe Ausfallssicherheit durch robustes Design und geringe Bauteilanzahl
- niedrige Herstellungskosten durch geringe Bauteilanzahl
- hohe Variabilität durch einfache Anpassung für unterschiedliche Gase.

Erfindungsgemäß wird dies dadurch erreicht, dass zwischen einem einlassseitigem Hochdruckraum und einem auslassseitigem Niederdruckraum zumindest zwei Strömungswege mit bestimmtem Querschnitt ausgeführt sind und mit einer auf der Hoch- oder auf der Niederdruckseite angeordneten Verschlusseinheit geöffnet oder verschlossen werden, wobei zwischen zwei Betriebweisen unterschieden wird:
- Hochdruckbereich: Bei hohen Drücken im eingangsseitigen Hochdruckraum oder bei kleinen Volumenströmen wird der Strömungsweg mit dem kleineren Querschnitt durch die Verschlusseinheit freigegeben, wobei aufgrund der Flächenverhältnisse eine kleine elektrische Leistung benötigt wird.
- Niederdruckbereich: Bei niedrigen Drücken im eingangsseitigen Hochdruckraum wird der Strömungsweg mit dem größeren Querschnitt durch die Verschlusseinheit freigegeben, wobei aufgrund der Druckverhältnisse nur eine kleine elektrische Leistung benötigt wird.

Der Übergang zwischen den beiden Betriebsweisen wird durch den Querschnitt der Strömungswege und durch die Betätigungskraft der Verschlusseinheit festgelegt. Die Strömungswege können nebeneinander angeordnet sein.

Anhand der Zeichnungen werden verschiedene Ausführungsformen der Erfindung im Folgenden erläutert:
Fig. 1 zeigt schematisch eine Kraftstoffversorgungsanlage eines gasbetriebenen Kraftfahrzeuges
Fig. 2 zeigt einen Druckregler im nicht erregten geschlossenen Zustand
Fig. 2.1 zeigt einen Druckregler im erregten geöffneten Zustand bei hohen Drücken im eingangsseitigen Hochdruckraum (Hochdruckbereich)
Fig. 2.2 zeigt einen Druckregler im erregten geöffneten Zustand bei niedrigen Drücken im eingangsseitigen Hochdruckraum (Niederdruckbereich)
Fig. 3 zeigt einen Druckregler gemäß einem Ausführungsbeispiel der vorliegenden Erfindung im nicht erregten geschlossenen Zustand
Fig. 3.1 zeigt einen Druckregler gemäß einem Ausführungsbeispiel der vorliegenden Erfindung im erregten geöffneten Zustand bei hohen Drücken im eingangsseitigen Hochdruckraum (Hochdruckbereich)
Fig. 3.2 zeigt einen Druckregler gemäß einem Ausführungsbeispiel der vorliegenden Erfindung im erregten geöffneten Zustand bei niedrigen Drücken im eingangsseitigen Hochdruckraum (Niederdruckbereich)
Fig. 4 zeigt einen Druckregler gemäß einem Ausführungsbeispiel der vorliegenden Erfindung im nicht erregten geschlossenen Zustand
Fig. 4.1 zeigt einen Druckregler gemäß einem Ausführungsbeispiel der vorliegenden Erfindung im erregten geöffneten Zustand bei hohen Drücken im eingangsseitigen Hochdruckraum (Hochdruckbereich)
Fig. 4.2 zeigt einen Druckregler gemäß einem Ausführungsbeispiel der vorliegenden Erfindung im erregten geöffneten Zustand bei niedrigen Drücken im eingangsseitigen Hochdruckraum (Niederdruckbereich)
Fig. 5 zeigt einen Druckregler gemäß einem Ausführungsbeispiel der vorliegenden Erfindung im nicht erregten geschlossenen Zustand mit geänderter Abdichtung des Schließkörpers.
Fig. 6 zeigt einen Druckregler gemäß einem Ausführungsbeispiel der vorliegenden Erfindung im nicht erregten geschlossenen Zustand mit geändertem Ventilkolben.
Fig. 7 zeigt unterschiedliche Ausführungen für die Mitnehmerfunktion des Ventilkolbens für den erfindungsgemäßen Druckregler gemäß einer Ausführungsform
Fig. 8 zeigt einen Druckregler gemäß der vorliegenden Erfindung mit einem Ausführungsbeispiel für einen ausgeführten Wämeübertrager.
Fig. 8.1 zeigt einen Druckregler gemäß der vorliegenden Erfindung mit einem Ausführungsbeispiel für einen ausgeführten Wämeübertrager.
Fig. 8.2 zeigt einen Druckregler gemäß der vorliegenden Erfindung mit einem Ausführungsbeispiel für einen ausgeführten Wämeübertrager.
Fig. 9 zeigt ein Ausführungsbeispiel einer Regeleinheit mit dem erfindungsgemäßen Druckregler.
Fig. 9.1 zeigt ein Ausführungsbeispiel einer Regeleinheit mit dem erfindungsgemäßen Druckregler.

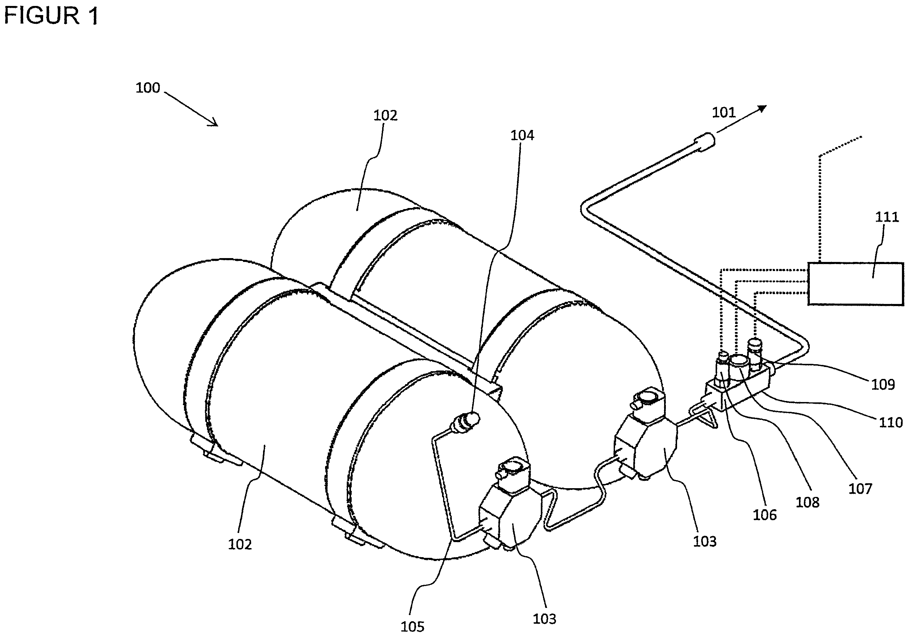

Wie in Fig. 1 gezeigt, umfasst eine Kraftstoffversorgungsanlage 100 , insbesondere eines gasbetriebenen Kraftfahrzeuges, für die Versorgung eines Verbrauchers 101, mit gasförmigen Krafftstoff wie Erdgas, Methan, Biogas, Wasserstoff oder dergleichen aus einem oder mehreren Speicherbehältern 102 samt Tankventil 103, die bei der Betankung über eine befüllseitig angeordnete Befüllkupplung 104 mit integrierter Rückflusssperre und einer daran anschließenden Gaszuführleitung 105 mit Kraftstoffgas versorgt werden. Für die Entnahme ist weiters eine Regeleinheit 106, zumindest bestehend aus Druckregler 107, Hochdrucksensor 108, Niederdrucksensor 109 und Sicherheitseinrichtungen 110 (Hochdrucksicherung, Niederdrucksicherung, Thermische Sicherung) vorgesehen, die von einem Steuergerät 111, dass das Steuersignal nach Vorgabe des Verbrauchers 101 und unter Berücksichtigung des Speicherdruckes und des Arbeitsdruckes erzeugt, angesteuert wird.

In einer weiteren Ausführungsform kann die Betankung, ausgehend von der befüllseitig angeordneten Befüllkupplung mit integrierter Rückflusssperre über die Regeleinheit erfolgen, wobei eingangsseitig wahlweise ein Rückschlagventil und wahlweise ein Filter sowie geeignete Leitungsanschlüsse zur Befüllkupplung und zu den Hochdruck-Speicherbehältern angeordnet sind.

In einer weiteren Ausführungsform kann die Befüllkupplung mit integrierter Rückflusssperre in die Regeleinheit integriert werden.

In einer weiteren Ausführungsform kann ein Systemabsperrventil in die Regeleinheit integriert werden.

In einer weiteren Ausführungsform kann der Druckregler in das Flaschenventil integriert werden.

In einer weiteren Ausführungsform kann die Regeleinheit in das Flaschenventil integriert werden.

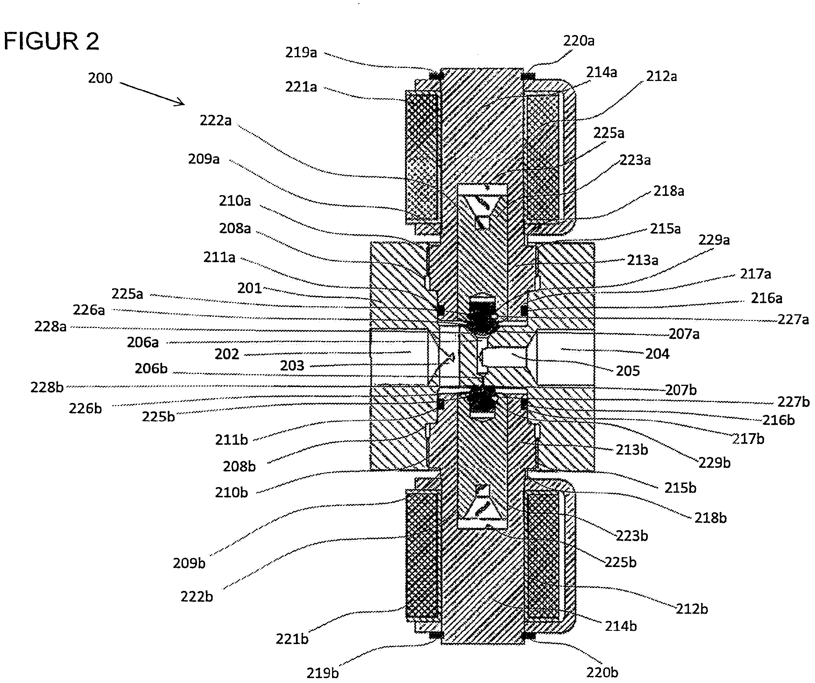

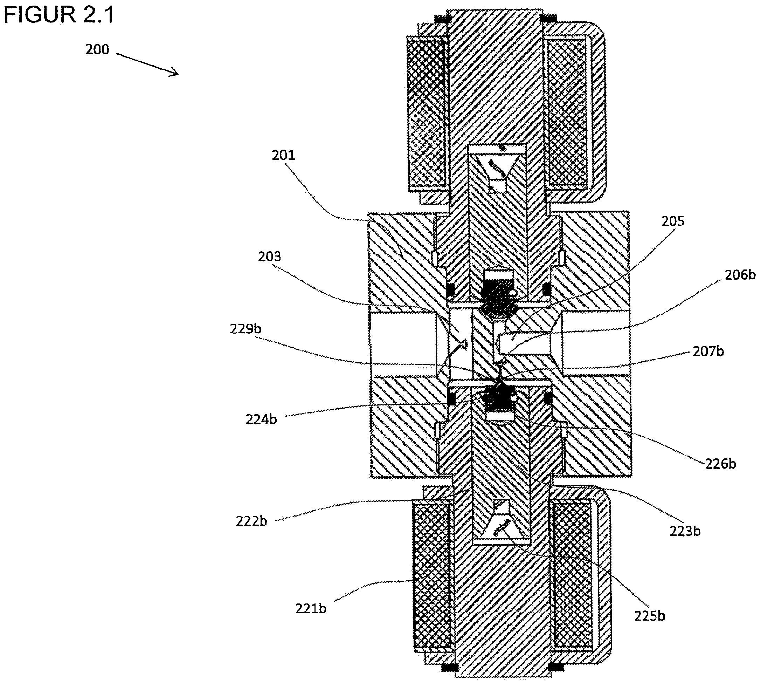

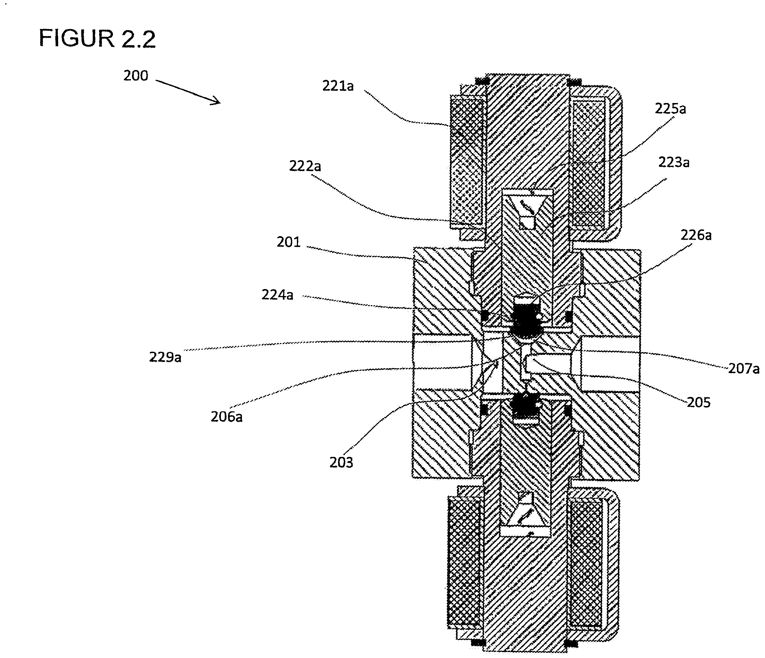

Wie in Fig. 2 gezeigt, umfasst der Druckreger 200 ein Gehäuse 201, in welchem zumindest ein Einlass 202 mit nachfolgendem Hochdruckraum 203, ein Auslass 204 mit vorgelagertem Niederdruckraum 205, Strömungswege 206a und 206b zwischen dem Hochdruckraum 203 und dem Niederdruckraum 205, Dichtsitze 207a und 207b im Strömungsweg 206a und 206b zwischen dem Hochdruckraum 203 und dem Niederdruckraum 205, Verschlusseinheiten 209a und 209b mit einem inneren Gewinde 210a und 210b für die Verschraubung der Verschlusseinheiten 209a und 209b im Gehäuse 201 und Dichtsitze 211a und 211b für die Abdichtung der Verschlusseinheiten 209a und 209b im Gehäuse 201 vorgesehen sind. Die Verschlusseinheit 209a und 209b umfasst ein Ventilgehäuse 212a und 212b mit einem Einschraubteil 213a und 213b und gegenüberlegend einem Führungsteil 214a und 214b. Der Einschraubteil 213a und 213b ist mit einem äußeren Gewinde 215a und 215b zur Verschraubung mit dem inneren Gewinde 210a und 210b des Gehäuses 201, einer außenliegenden Nut 216a und 216b für die Aufnahmebohrungen 208a und 208b zur Aufnahme eines Dichtringes 217a und 217b zur Abdichtung des Ventilgehäuses 212a und 212b gegenüber dem Gehäuse 201 und einer Werkzeugaufnahme 218a und 218b zum Erfassen durch ein Werkzeug zum Einschrauben der Verschlusseinheiten 209a und 209b in das Gehäuse 201 versehen. Der Führungsteil 214a und 214b ist mit einer außenliegenden Ringnut 219a und 219b zur Aufnahme eines Sicherungsringes 220a und 220b zur Fixierung der auf den Führungsteil 214a und 214b aufgesetzten Magnetspule 221a und 221b versehen. Im Inneren des Ventilgehäuses 212a und 212b ist ein Ventilkolben 222a und 222b bestehend aus einem Anker 223a und 223b, einem Mitnehmer 224a und 224b, einer Feder 225a und 225b und einem Schließkörper 226a und 226b, verschiebbar zwischen einer Schließstellung und einer Offenstellung angeordnet. Am ersten Ende des magnetischen Anker 222a und 222b wird der Schließkörper 226a und 226b aufgenommen, wobei eine innenliegende Nut 227a und 227b zur Aufnahme des Mitnehmers 224a und 224b für den Schließkörper 226a und 226b vorgesehen ist. Am gegenüberliegenden zweiten Ende wird der Anker 222a und 222b im Führungsteil 214a und 214b mit geringem Radialspiel geführt, wobei am zweiten Ende eine Bohrung 228a und 228b zur Aufnahme der Feder 224a und 224b vorgesehen ist. Am Schließkörper 226a und 226b aus einem Dichtwerkstoff ist eine Dichtfläche 229a und 229b und eine außenliegende Nut 230a und 230b zur Abstützung des Mitnehmers 223a und 223b ausgeführt.

In einer weiteren Ausführungsform kann der Schließkörper 226a und 226b direkt im magnetischen Anker 222a und 222b ohne Mitnehmers 223a und 223b befestigt werden, wobei wahlweise eine Entlüftung der rückseitigen Fläche des Mitnehmers 223a und 223b vorzusehen ist.

In einer weiteren Ausführungsform kann der Schließkörper 226a und 226b mit einer Nut zur Aufnahme einer geeigneten Dichtung ausgeführt werden, wobei wahlweise eine Entlüftung der rückseitigen Nutfläche vorzusehen ist.

In einer weiteren Ausführungsform kann das Gehäuse 201 mit einer Nut zur Aufnahme einer geeigneten Dichtung ausgeführt werden, wobei wahlweise eine Entlüftung der rückseitigen Nutfläche vorzusehen ist.

In einer weiteren Ausführungsform kann die Dichtfläche nicht direkt im Gehäuse, sondern an einem geeigneten Einschraubteil oder an einem geeigneten Einpressteil ausgeführt werden.

In einer weiteren Ausführungsform kann anstatt einem Schließkörper aus einem geeigneten Dichtmaterial ein metallischer Schließkörper verwendet werden.

In einer weiteren Ausführungsform können die Verschlusseinheiten 209a und 209b auf der Niederdruckseite angeordnet werden.

In einer weiteren Ausführungsform können die Verschlusseinheiten 209a und 209b an beliebiger Stelle des Gehäuses angeordnet werden.

In einer weiteren Ausführungsform können die Verschlusseinheiten 209a und 209b an beliebiger Stelle des Gehäuses angeordnet werden.

Nachfolgend wird die Wirkungsweise eines Druckreglers beschrieben:
Wie in Fig. 2 gezeigt, drückt im stromlosen und nicht erregtem Zustand der Magnetspule 221a die Feder 225a und 225b den Anker 223a und 223b des Ventilkolbens 222a und 222b nach unten, wobei sich die Dichtfläche 229a und 229b des Schließkörpers 226a und 226b am Dichtsitz 207a und 207b im Gehäuse 201 abstützt und somit die Strömungswege 206a und 206b zwischen dem Hochdruckraum 203 und dem Niederdruckraum 205 verschließt.

Wie in Fig. 2.1 gezeigt, wird durch Ansteuerung und Erregung der Magnetspule 221b der Anker 223b des Ventilkolbens 222b entgegen der wirksamen Feder 225b angehoben und hebt die Dichtfläche 229b des Schließkörpers 226b durch den Mitnehmer 224b vom Dichtsitz 207b im Gehäuse 201 ab, wobei der Strömungsweg 206b vom Hochdruckraum 203 zum Niederdruckraum 205 frei liegt. Der Betriebszustand nach Fig. 21 wird bei hohen Eingangsdrücken umgesetzt, wobei aufgrund der geringen Größe der nicht druckausgeglichenen Fläche eine geringe elektrische Leistung zum Anheben des Ventilkolbens benötigt und aufgrund des kleinen freigegebenen Strömungsdurchmessers eine große Druckreduktion erreicht.

Wie in Fig. 2.2 gezeigt, wird durch Ansteuerung und Erregung der Magnetspule 221a der Anker 223a des Ventilkolbens 222a entgegen der wirksamen Feder 225a angehoben und hebt die Dichtfläche 229a des Schließkörpers 226a durch den Mitnehmer 224a vom Dichtsitz 207a im Gehäuse 201 ab, wobei der zweite Strömungsweg 206a vom Hochdruckraum 203 zum Niederdruckraum 205 frei liegt. Der Betriebszustand nach Fig. 22 wird bei mittleren und niedrigen Eingangsdrücken umsetzt und aufgrund des großen Strömungsquerschnittes ein großer Massenstrom bei kleiner Druckreduktion erreicht.

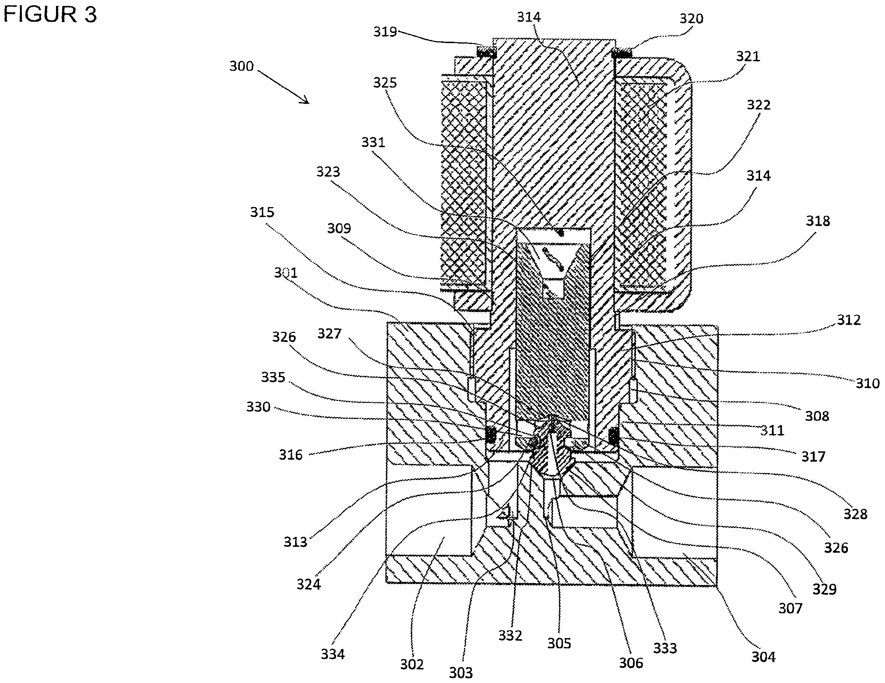

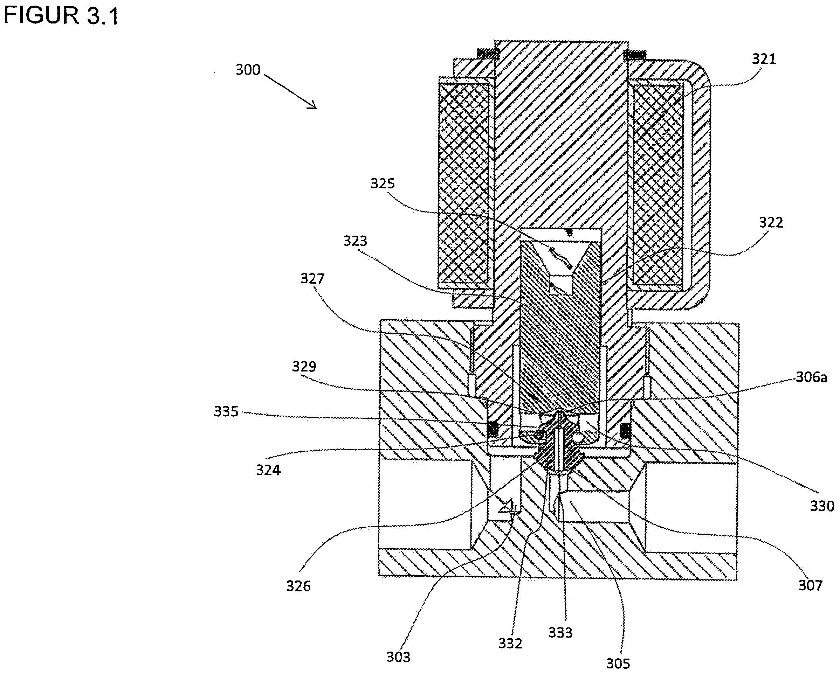

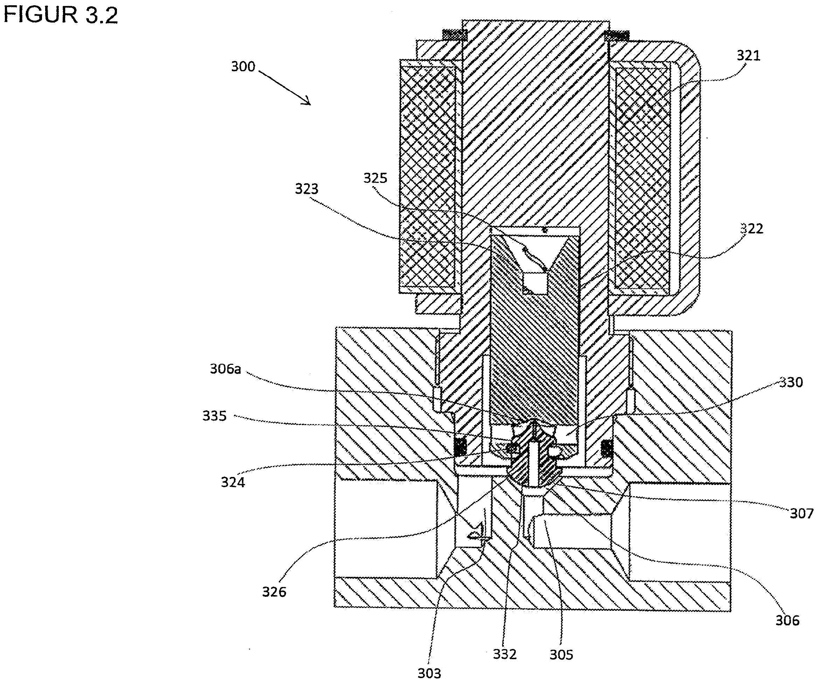

Wie in Fig. 3 gezeigt, umfasst der Druckreger 300 ein Gehäuse 301, in welchem zumindest ein Einlass 302 mit einem nachfolgenden Hochdruckraum 303, ein Auslass 304 mit einem vorgelagertem Niederdruckraum 305, ein Strömungsweg 306 zwischen dem Einlass 302 und dem Auslass 304, ein Dichtsitz 307 im Strömungsweg 306 zwischen dem Hochdruckraum 303 und dem Niederdruckraum 305, eine Aufnahmebohrung 308 für die Aufnahme der Verschlusseinheit 309 mit einem inneren Gewinde 310 für die Verschraubung der Verschlusseinheit 309 im Gehäuse 301 und ein Dichtsitz 311 für die Abdichtung der Verschlusseinheit 309 im Gehäuse 301 vorgesehen sind. Die Verschlusseinheit 309 umfasst ein Ventilgehäuse 312 mit einem Einschraubteil 313 und gegenüberlegend einem Führungsteil 314. Der Einschraubteil 313 ist mit einem äußeren Gewinde 315 zur Verschraubung mit dem inneren Gewinde 310 des Gehäuses 301, einer außenliegenden Nut 316 für die Aufnahme eines Dichtringes 317 zur Abdichtung der Verschlusseinheit 309 gegenüber dem Gehäuse 301 und einer Werkzeugaufnahme 318 zum Erfassen durch ein Werkzeug zum Einschrauben der Verschlusseinheit 309 in das Gehäuse 301 versehen. Der Führungsteil 314 ist mit einer außenliegenden Ringnut 319 zur Aufnahme eines Sicherungsringes 320 zur Fixierung der auf den Führungsteil 314 aufgesetzten Magnetspule 321 versehen. Im Inneren der Verschlusseinheit 309 ist ein Ventilkolben 322, bestehend aus einem Anker 323, einem Mitnehmer 324, einer Feder 325 und einem Schließkörper 326, verschiebbar zwischen einer Schließstellung einer ersten Offenstellung und einer zweiten Offenstellung angeordnet. Am ersten Ende des magnetischen Anker 323 wird der Schließkörper 326 aufgenommen, wobei ein innenliegender Dichtsitz 327 zur Abstützung an der oberen Dichtfläche 328 des Schließköpers 326, eine innenliegende Nut 329 zur Aufnahme des Mitnehmers 324, und zumindest eine Querbohrung 330 vorgesehen ist. Am gegenüberliegenden zweiten Ende wird der Anker 323 im Führungsteil 314 mit geringem Radialspiel geführt, wobei das offene Ende 331 zur Aufnahme der Feder 325 vorgesehen ist. Am Schließkörper 326 aus einem Dichtwerkstoff ist eine obere Dichtfläche 328, gegenüberliegend eine unteren Dichtfläche 332 mit unterschiedlicher Abmessung, eine axiale Drosselbohrung 333 zwischen den beiden Dichtflächen und einer außenliegende Nut 334 zur Abstützung des Mitnehmers 324 der Verschlusseinheit 309 ausgeführt.

Nachfolgend wird die Wirkungsweise des erfindungsgemäßen elektromechanischen Druckreglers beschrieben:
Wie in Fig. 3 gezeigt, drückt im stromlosen und nicht erregtem Zustand der Magnetspule 321 die Feder 325 den Anker 323 der Verschlusseinheit 309 nach unten, wobei sich die untere Dichtfläche 332 des Schließkörpers 326 am Dichtsitz 307 im Gehäuse 301 und die obere Dichtfläche 328 des Schließkörpers 326 an der Dichtfläche 327 des Ankers 323 abstützt und somit den Strömungsweg 306 zwischen dem Hochdruckraum 303 und dem Niederdruckraum 305 verschließt. In diesem Betriebszustand ist zwischen dem Mitnehmer 324 und dem Schließkörper 326 in Bewegungsrichtung des Ventilkolbens 322 ein Spalt 335 vorhanden.

Wie in Fig. 3.1 gezeigt, wird durch Ansteuerung und Erregung der Magnetspule 321 der Anker 323 des Ventilkolbens 322 entgegen der wirksamen Feder 325 angehoben, wobei sich die untere Dichtfläche 332 des Schließkörpers 326 am Dichtsitz 307 im Gehäuse 301 abstützt und die Dichtfläche 327 des Ankers 323 von der oberen Dichtfläche 329 des Schließkörpers 326 abgehoben wird, wodurch ein Strömungsweg 306a vom Hochdruckraum 303 über die Querbohrung 330 im Anker 323 und der Drosselbohrung 333 im Schließkörper 326 zum Niederdruckraum 305 frei liegt. In diesem Betriebszustand ist zwischen dem Mitnehmer 324 und dem Schließkörper 326 in Bewegungsrichtung des Ventilkolbens 322 ein Spalt 335 vorhanden. Der Betriebszustand nach Fig. 3.1 wird bei hohen Eingangsdrücken umgesetzt, wobei aufgrund der geringen Größe der nicht druckausgeglichenen Fläche eine geringe elektrische Leistung zum Anheben des Ventilkolbens benötigt und aufgrund des kleinen freigegebenen Strömungsdurchmessers eine große Druckreduktion erreicht.

Wie in Fig. 3.2 gezeigt, wird durch Erhöhung der Erregung der Magnetspule 321 der Anker 323 des Ventilkolbens 322 weiter entgegen der wirksamen Feder 325 angehoben, der Spalt 335 zwischen dem Mitnehmer 324 und dem Schließkörper 326 in Bewegungsrichtung des Ventilkolbens 322 geschlossen und der Schließkörper 326 vom Mitnehmer 324 angehoben, wobei die untere Dichtfläche 332 des Schließkörpers 326 vom Dichtsitz 307 im Gehäuse 301 abgehoben und bei geöffnetem Strömungsweg 306a der Strömungsweg 306 zwischen dem Hochdruckraum 303 über den Dichtsitz 307 im Gehäuse 301 zum Niederdruckraum 305 frei liegt. Der Betriebszustand nach Fig. 3.2 wird bei mittleren und niedrigen Eingangsdrücken umsetzt und aufgrund des großen Strömungsquerschnittes ein großer Massenstrom bei kleiner Druckreduktion erreicht.

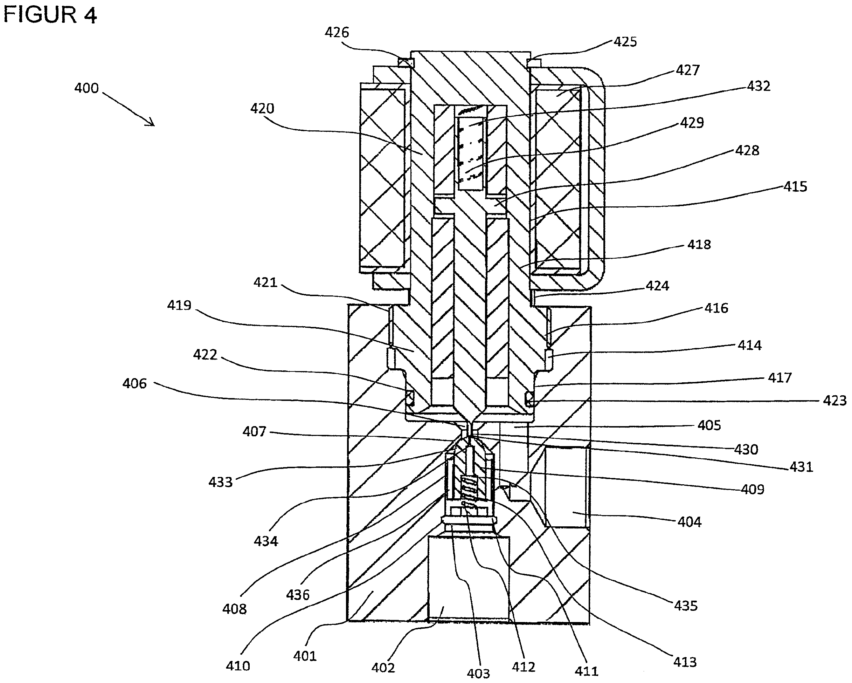

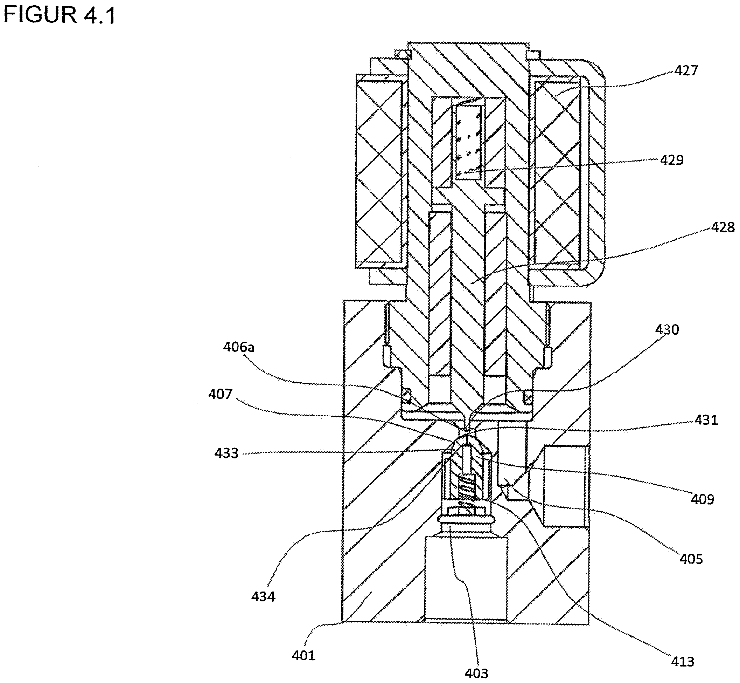

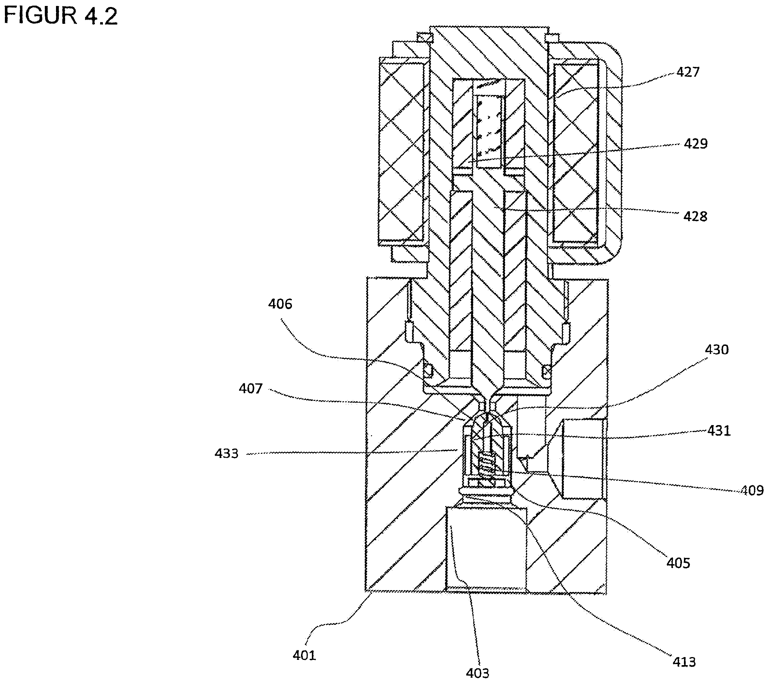

Wie in Fig. 4 gezeigt, umfasst der Druckreger 400 ein Gehäuse 401, in welchem zumindest ein Einlass 402 mit einem nachfolgenden Hochdruckraum 403, ein Auslass 404 mit einem vorgelagertem Niederdruckraum 405, ein Strömungsweg 406 zwischen dem Einlass 402 und dem Auslass 404, ein Dichtsitz 407 im Strömungsweg 406 zwischen dem Hochdruckraum 403 und dem Niederdruckraum 405, eine Aufnahmebohrung 408 für die Aufnahme des Schließkörpers 409 im Gehäuse 401 samt Nut 410 für die Aufnahme eines Sicherungsringes 411 zur Abstützung eines Gegenhalters 412 für die erste Feder 413, eine Aufnahmebohrung 414 für die Aufnahme der Verschlusseinheit 415 mit einem inneren Gewinde 416 für die Verschraubung der Verschlusseinheit 415 im Gehäuse 401 und ein Dichtsitz 417 für die Abdichtung der Verschlusseinheit 415 im Gehäuse 401 vorgesehen sind. Die Verschlusseinheit 415 umfasst ein Ventilgehäuse 418 mit einem Einschraubteil 419 und gegenüberlegend einem Führungsteil 420. Der Einschraubteil 419 ist mit einem äußeren Gewinde 421 zur Verschraubung mit dem inneren Gewinde 416 des Gehäuses 401, einer außenliegenden Nut 422 für die Aufnahme eines Dichtringes 423 zur Abdichtung der Verschlusseinheit 415 gegenüber dem Gehäuse 401 und einer Werkzeugaufnahme 424 zum Erfassen durch ein Werkzeug zum Einschrauben der Verschlusseinheit 415 in das Gehäuse 401 versehen. Der Führungsteil 420 ist mit einer außenliegenden Ringnut 425 zur Aufnahme eines Sicherungsringes 426 zur Fixierung der auf den Führungsteil 420 aufgesetzten Umkehrhubmagnetspule 427 versehen. Im Inneren der Verschlusseinheit 415 ist ein magnetischer Anker 428 und einer zweiten Feder 429 geringerer Stärke als die erste Feder 413, verschiebbar zwischen einer Schließstellung einer ersten Offenstellung und einer zweiten Offenstellung angeordnet. Am ersten Ende des magnetischen Ankers 428 ist ein außenliegender Dichtsitz 430 zur Abdichtung an der ersten Dichtfläche 431 am Schließkörper 409 ausgeführt. Am gegenüberliegenden zweiten Ende wird der Anker 428 im Führungsteil 420 mit geringem Radialspiel geführt, wobei das offene Ende 432 zur Aufnahme der Feder 429 vorgesehen ist. Am Schließkörper 409 aus einem Dichtwerkstoff ist eine erste Dichtfläche 431, eine zweite Dichtfläche 433 mit unterschiedlicher Abmessung, eine axiale Drosselbohrung 434 zwischen den beiden Dichtflächen und einer Bohrung 435 zur Aufnahme der Feder 413 und wahlweise außen- oder innenliegende Strömungskanäle 436 ausgeführt.

In einer weiteren Ausführungsform kann der Schließkörper 409 mit Nuten zur Aufnahme geeigneter Dichtungen ausgeführt werden, wobei wahlweise eine Entlüftung der rückseitigen Nutflächen vorzusehen ist.

In einer weiteren Ausführungsform kann das Gehäuse 401 mit Nut zur Aufnahme geeigneter Dichtung ausgeführt werden, wobei wahlweise eine Entlüftung der rückseitigen Nutfläche vorzusehen ist.

In einer weiteren Ausführungsform kann die Dichtfläche nicht direkt im Gehäuse, sondern an einem geeigneten Einschraubteil oder an einem geeigneten Einpressteil ausgeführt werden.

In einer weiteren Ausführungsform kann anstatt einem Schließkörper aus einem geeigneten Dichtmaterial ein metallischer Schließkörper verwendet werden.

Nachfolgend wird die Wirkungsweise des erfindungsgemäßen elektromechanischen Druckreglers beschrieben:
Wie in Fig. 4 gezeigt, drückt im stromlosen und nicht erregtem Zustand der Umkehrhubmagnetspule 427 die Feder 429 den Anker 428 der Verschlusseinheit 415 gegen den Schließkörper 409, wobei sich die erste Dichtfläche 431 des Schließkörpers 409 an der Dichtfläche 430 des Ankers 428 und die zweite Dichtfläche 433 des Schließkörpers 409 durch die Kraft der Feder 413 am Dichtsitz 407 im Gehäuse 401 abstützt und somit den Strömungsweg 406 zwischen dem Hochdruckraum 403 und dem Niederdruckraum 405 verschließt.

Wie in Fig. 4.1 gezeigt, wird durch Ansteuerung und Erregung der Umkehrhubmagnetspule 427 der Anker 428 entgegen der wirksamen Feder 433 bewegt, wobei sich die zweite Dichtfläche 433 des Schließkörpers 409 durch die Kraft der Feder 413 am Dichtsitz 407 im Gehäuse 401 abstützt und die Dichtfläche 430 des Ankers 428 von der ersten Dichtfläche 431 des Schließkörpers 409 abgehoben wird, wodurch der Strömungsweg 406a vom Hochdruckraum 403 über die Drosselbohrung 434 im Schließkörper 409 zum Niederdruckraum 405 frei liegt. Der Betriebszustand nach Fig. 4.1 wird bei hohen Eingangsdrücken umgesetzt, wobei aufgrund der geringen Größe der nicht druckausgeglichenen Fläche eine geringe elektrische Leistung zum Anheben des Ankers benötigt und aufgrund des kleinen freigegebenen Strömungsdurchmessers eine große Druckreduktion erreicht wird.

Wie in Fig. 4.2 gezeigt, wird durch Ansteuerung und Erregung der Umkehrhubmagnetspule 427 der Anker 428 entgegen der wirksamen Feder 413 bewegt, wobei sich die Dichtfläche 430 des Ankers 428 an der erste Dichtfläche 431 des Schließkörpers 409 abstützt und die zweite Dichtfläche 433 des Schließkörpers 409 vom Dichtsitz 407 im Gehäuse 401 abgehoben wird, wodurch der Strömungsweg 406 vom Hochdruckraum 403 über den Dichtsitz 407 im Gehäuse zum Niederdruckraum 405 frei liegt. Der Betriebszustand nach Fig. 4.2 wird bei mittleren und niedrigen Eingangsdrücken umsetzt und aufgrund des großen Strömungsquerschnittes ein großer Massenstrom bei kleiner Druckreduktion erreicht.

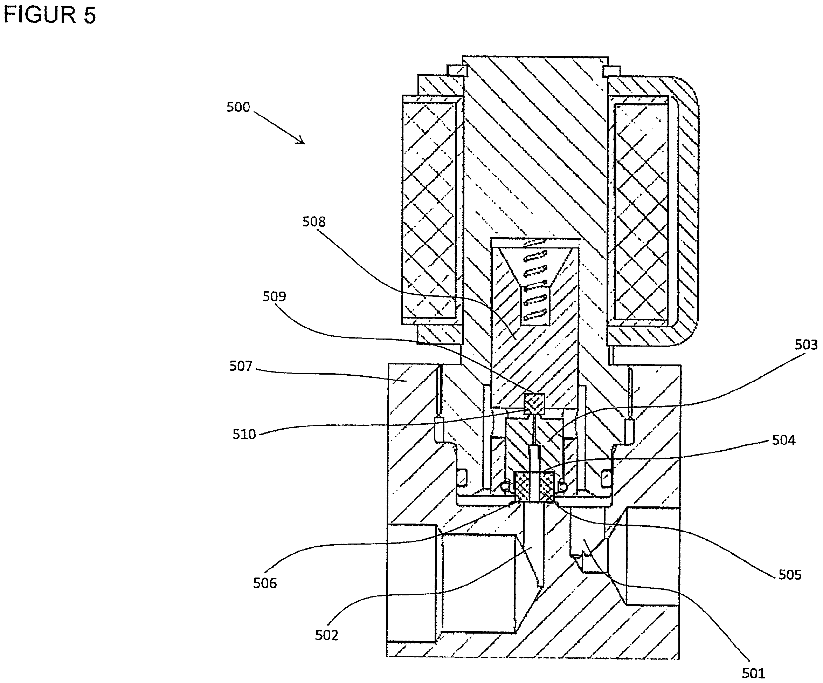

Fig. 5 zeigt den erfindungsgemäßen Druckregler 500 mit einem geänderten Abdichtsystem zwischen dem Hochdruckraum 501 und dem Niederdruckraum 502, wobei der Schließkörper 503 zumindest eine geeignete Aufnahme 504 für eine geeignete Dichtung 505 aufweist , die sich am Dichtsitz 506 im Gehäuse 507 abstützt und der Anker 508 eine geeignete Aufnahme 509 für eine geeignete Dichtung 510 aufweist, die sich am Schließkörper 503 abstützt, wobei wahlweise eine Entlüftung der rückseitigen Nutflächen vorzusehen ist.

In einer weiteren Ausführungsform weist der Schließkörper zwei Aufnahmen für die beiden Dichtungen auf.

In einer weiteren Ausführungsform weisen das Gehäuse und der Anker jeweils eine Aufnahme für die beiden Dichtungen auf.

In einer weiteren Ausführungsform weist der das Gehäuse zwei Aufnahmen für die beiden Dichtungen auf.

In einer weiteren Ausführungsform kann zur Stabilisierung des Schließkörpers eine separate Hülse im Schließköper verbaut werden.

In einer weiteren Ausführungsform kann der Schließköper mehrteilig ausgeführt werden.

In einer weiteren Ausführungsform kann die Dichtfläche nicht direkt im Gehäuse, sondern an einem geeigneten Einschraubteil oder an einem geeigneten Einpressteil ausgeführt werden.

In einer weiteren Ausführungsform kann anstatt einem Schließkörper aus einem geeigneten Dichtmaterial ein metallischer Schließkörper verwendet werden.

Weitere Ausführungsformen des Abdichtsystems zwischen dem Hochdruckraum und dem Niederdruckraum entstehen durch Kombination der bereits beschriebenen Ausführungsformen für das Abdichtungssystem.

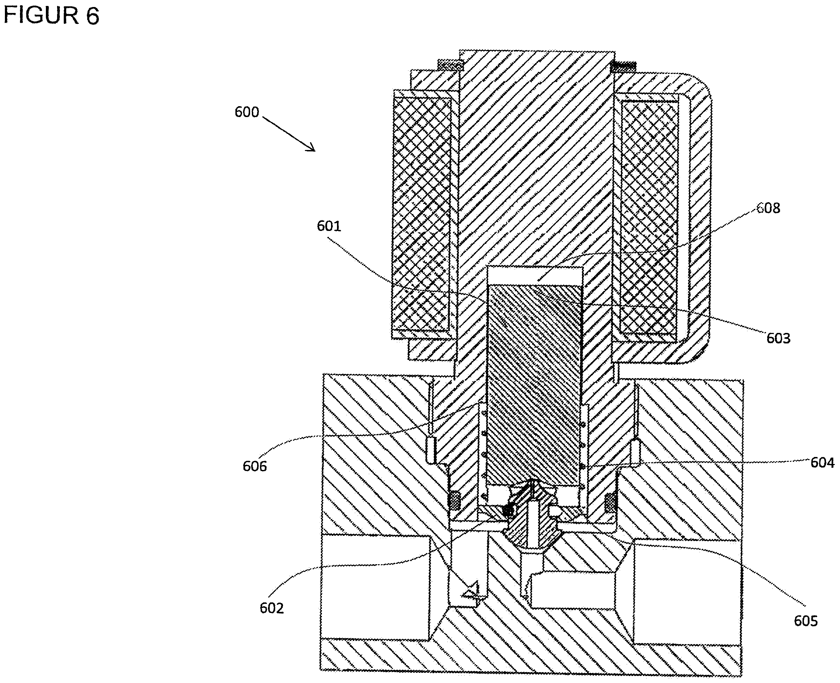

Fig. 6 zeigt den erfindungsgemäßen Druckregler 600 mit einem geänderten Erregersystem. Der Anker 601 verfügt über ein offenes Ende 602 und ein geschlossenes Ende 603, wobei sich die Feder 604 an einer außenliegenden Schulter 605 des offenen Ankerendes 602 gegenüber einer innenliegenden Schulter 606 des offenen Ventilgehäuses 607 abstützt, sodass durch die konstruktive Gestaltung des Arbeitsluftspaltes 608 der Verlauf der Magnetkraftkennlinie gezielt beeinflusst werden kann.

Grundsätzlich kann eine Verschlusseinheit mit diskreter Schaltfunktion (Zweistellungs-Hubmagnet mit einer Offen- und einer Schließstellung bei Verwendung einer elektromechanischen Verschlusseinheit) oder eine kontinuierlich schaltende Verschlusseinheit (Proportionalmagnet mit beliebigen Zwischenstellungen zwischen der Offen- und der Schließstellung bei Verwendung einer elektromechanischen Verschlusseinheit) zur Lagebeeinflussung des Schließkörpers verwendet werden.

In einer weiteren Ausführungsform ist das Ventilgehäuse mit einer Einrichtung zum mechanischen Öffnen und wahlweise zum mechanischen Schließen des Schließkörpers versehen.

In einer weiteren Ausführungsform ist das Ventilgehäuse zur besseren Magnetflussführung mehrteilig ausgeführt.

In einer weiteren Ausführungsform ist der Anker zur besseren Magnetfußführung oder zur besseren Führung im Ventilgehäuse mehrteilig ausgeführt.

In einer weiteren Ausführungsform können mehrere Magnetspulen hintereinander verbaut werden.

Weitere Ausführungsformen entstehen, wenn die strömungstechnisch parallel angeordneten Strömungswege zwischen dem eingangsseitigem Hochdruckraum und dem ausgangsseitigem Niederdruckraum durch einen rotierenden Aktor oder rotierende Aktoren geöffnet oder verschlossen werden.

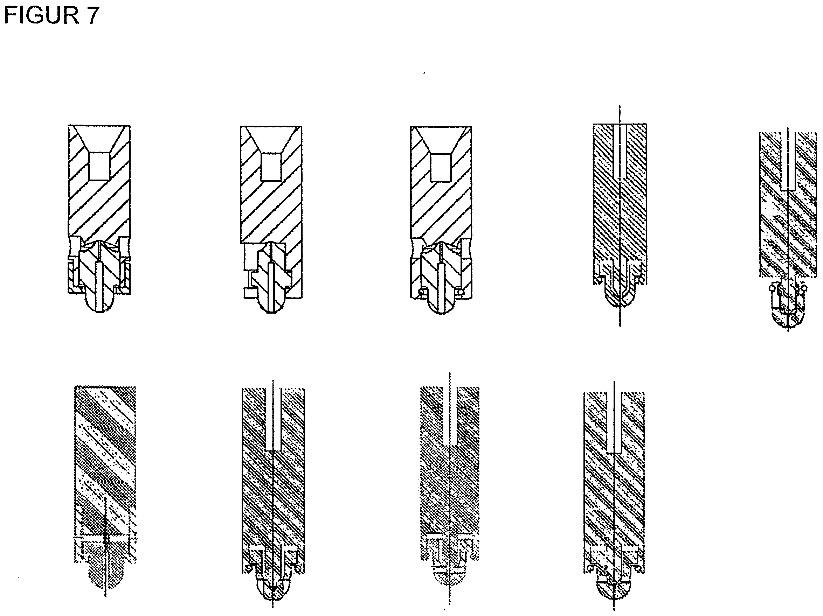

Fig. 7 zeigt unterschiedlich Möglichkeiten zur Ausführung der Mitnehmerfunktion des Ventilkolbens für den erfindungsgemäßen Druckregler nach einer Ausführungsform.

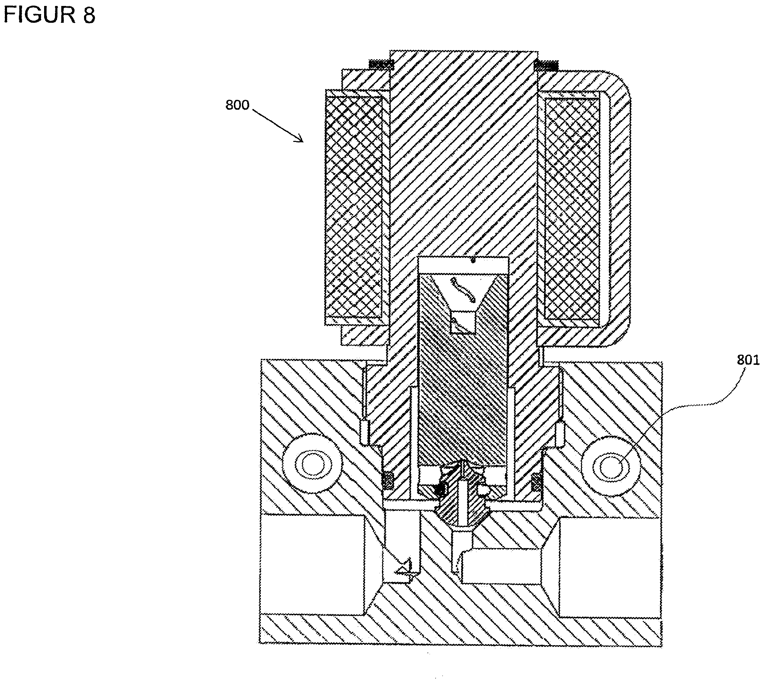

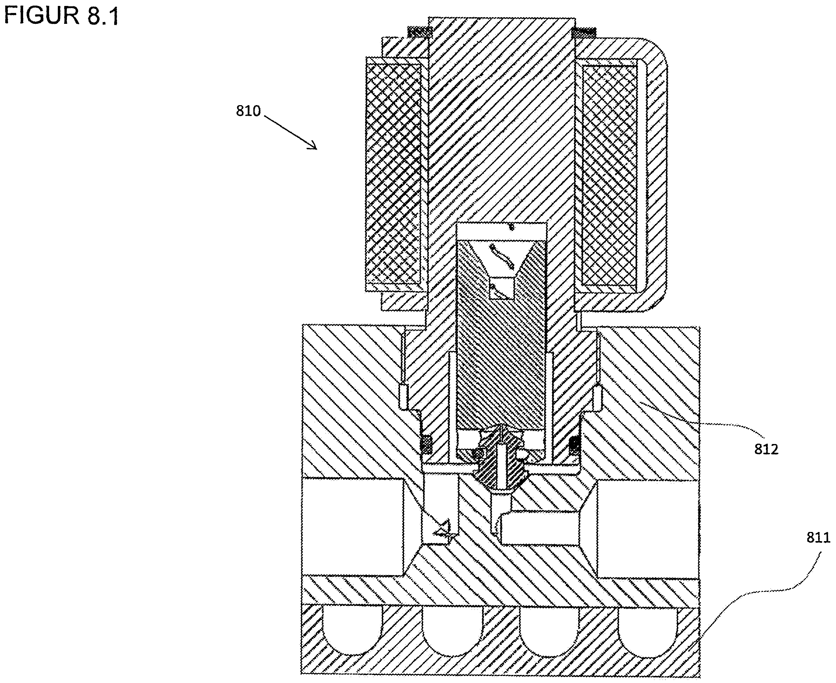

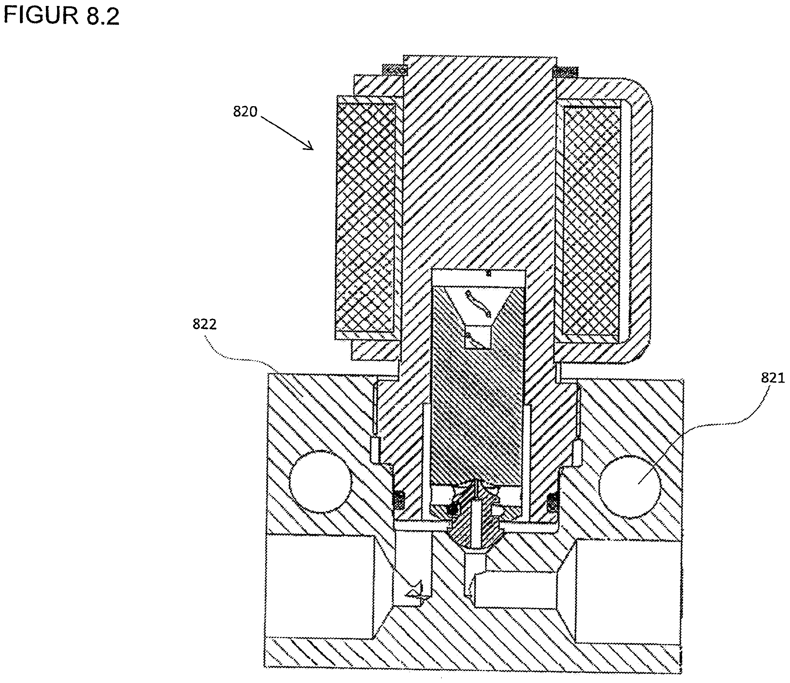

Fig. 8 zeigt den erfindungsgemäßen Druckregler 800 mit einem Heizsystem zur Vermeidung von Vereisung oder zu starker Abkühlung des Druckreglers bei Gasen mit negativem Joule-Thomson-Koeffizient im Arbeitsbereich des Druckreglers, wobei die Erzeugung der Heizwärme mittels eingesetztem elektrischen Heizer 801 erfolgt.

Fig. 8.1 zeigt den erfindungsgemäßen Druckregler 810 mit einem Heizsystem zur Vermeidung von Vereisung oder zu starker Abkühlung des Druckreglers bei Gasen mit negativem Joule-Thomson-Koeffizient im Arbeitsbereich des Druckreglers, wobei die Erzeugung der Heizwärme durch Zufuhr von Kühlwasser erfolgt, wobei der Kühler 811 in geeigneter Weise an das Gehäuse 812 angebaut ist.

Fig. 8.2 zeigt den erfindungsgemäßen Druckregler 820 mit einem Heizsystem zur Vermeidung von Vereisung oder zu starker Abkühlung des Druckreglers bei Gasen mit negativem Joule-Thomson-Koeffizient im Arbeitsbereich des Druckreglers, wobei die Erzeugung der Heizwärme durch Zufuhr von Kühlwasser erfolgt, dass durch Kühlkanäle 821 im Gehäuse 822 des Druckreglers geführt wird.

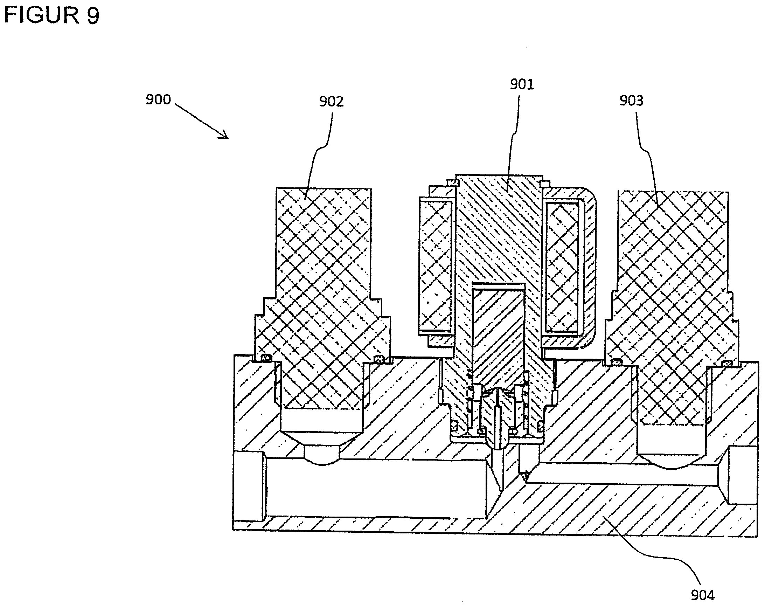

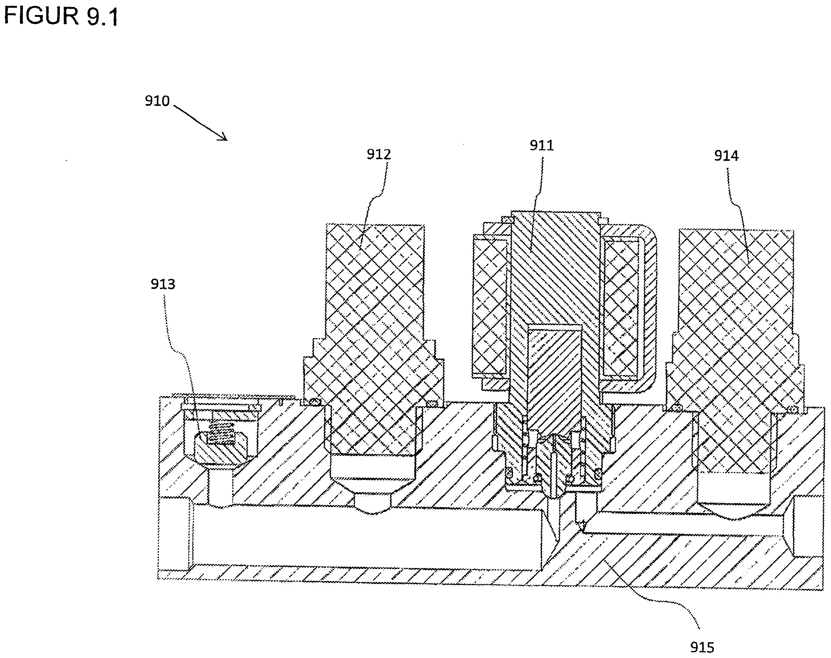

Fig. 9 zeigt eine Regeleinheit 900, bestehend zumindest aus dem erfindungsgemäßen Druckregler 901, einem Niederdrucksensor 902 und wahlweise einem Hochdrucksensor 903 in einem gemeinsamen Gehäuse 904, wobei bei Bedarf ein Heizsystem entsprechend Fig. 8 Fig. 8.1 oder Fig. 8.2 ausgeführt werden kann.

Fig. 9.1 zeigt eine Regeleinheit 910, bestehend zumindest aus dem erfindungsgemäßen Druckregler 911, einem Niederdrucksensor 912 einer Niederdruck-Sicherungseinrichtung 913 und wahlweise einem Hochdrucksensor 914 in einem gemeinsamen Gehäuse 915, wobei bei Bedarf ein Heizsystem entsprechend Fig. 8, Fig. 8.1 oder Fig. 8.2 ausgeführt werden kann.

Als Niederdrucksicherheitseinrichtung kann ein federbelasteter Schließkörper oder eine Berstscheibe verbaut werden.

In einer weiteren Ausführungsform kann die Befüllung der Hochdruck-Speicherbehälter über die Regeleinheit mit geeignet ausgeführten Leitungsanschlüssen erfolgen.

In einer weiteren Ausführungsform kann ein Rückschlagventil zur Befüllung der Hochdruck-Speicherbehälter über die Regeleinheit und entsprechende Leitungsanschlüsse in die Regeleinheit integriert werden.

In einer weiteren Ausführungsform kann ein Filterelement in die Regeleinheit integriert werden.

In einer weiteren Ausführungsform kann die Befüllkupplung zur Befüllung der Hochdruck-Speicherbehälter über die Regeleinheit und entsprechende Leitungsanschlüsse in die Regeleinheit integriert werden.

In einer weiteren Ausführungsform kann ein Systemabsperrventil hochdruckseitig oder niederdruckseitig in die Regeleinheit integriert werden.

In einer weiteren Ausführungsform kann eine temperaturabhängige Sicherheitseinrichtung in der Regeleinheit verbaut werden.

In einer weiteren Ausführungsform kann die Regeleinheit in das Flaschenventil integriert werden.

In einer weiteren Ausführungsform können einzelne Elemente der Regeleinheit in getrennten Gehäusen untergebracht werden.

In einer weiteren Ausführungsform kann das elektronische Steuergerät direkt an die Regeleinheit oder an den Druckregler angebaut werden.

Als elektromechanische Verschlusseinheit in der Beschreibung wird eine Verschlusseinheit nach dem Funktionsprinzip der elektro-magneto-mechanischen Energiewandlung angesehen.

In einer weiteren Ausführungsform wird eine Verschlusseinheit nach dem Funktionsprinzip der elektro-hydraulisch-mechanischen Energiewandlung, der elektropneumatisch-mechanischen Energiewandlung, der elektro-mechanischen Energiewandlung (Elektromotor) oder eine Kopplung beliebiger Energiewandlungsprinzipien verwendet.

Im Folgenden werden Verfahren zum Betrieb der Druckregler (107, 200, 300, 400, 500, 600, 800, 810, 820, 901, 911) beschrieben.

Weist der Druckregler (107, 200, 300, 400, 500, 600, 800, 810, 820, 901, 911) mehrere Strömungswegen (206a, 206b, 306, 306a, 406, 406a) unterschiedlichen Querschnitts zwischen dem eingangsseitigen Hochdruckraum (203, 303, 403, 501) und dem ausgangsseitigen Niederdruckraum (205, 305, 405, 502) auf, so öffnet oder schließt eine Steuerung bei hohen Drücken oder bei kleinen Volumenströmen die Strömungswege (206b, 306a, 406a) mit kleinem Querschnitt und bei niedrigen Drücken die Strömungswege (206b, 306a, 406a) mit großem Querschnitt mittelbar.

Weist der Druckregler (107, 200, 300, 400, 500, 600, 800, 810, 820, 901, 911) mehreren Strömungswegen gleichen Querschnitts zwischen dem eingangsseitigen Hochdruckraum (203, 303, 403, 501) und dem ausgangsseitigen Niederdruckraum (205, 305, 405, 502) auf, so öffnet oder schließt eine Steuerung bei hohen Drücken oder bei kleinen Volumenströmen wenige Strömungswege und bei niedrigen Drücken mehrere Strömungswege mittelbar.

Die Steuerung öffnet bei Unterschreitung des Arbeitsdruckes Strömungswege mittelbar und schießt bei Überschreitung des Arbeitsdruckes Strömungswege mittelbar.

## Patentansprüche

1. Druckregler (107, 300, 400, 500, 600, 800, 810, 820, 901, 911) für eine Kraftstoffversorgungsanlage (100), umfassend:
zumindest zwei Strömungswege (306, 306a, 406, 406a) zwischen einem Hochdruckraum (303, 403, 501) und einem Niederdruckraum (305, 405, 502), wobei der Druckregler weiterhin
eine elektromagnetische Einrichtung zum Öffnen und Schließen der zumindest zwei Strömungswege (306, 306a, 406, 406a) umfasst, die eine Magnetspule (321,427) sowie eine Verschlusseinheit (309,415) zur Verschraubung in einem Gehäuse (301, 401) mit einem magnetischen Anker (323, 428) aufweist, wobei sich, in einem stromlosen und unerregten Zustand der Magnetspule (321,427),
eine Dichtfläche (327, 430) des magnetischen Ankers (323, 428) an einer ersten Dichtfläche (328, 431) eines einstückigen Schließkörpers (326, 409) abstützt und somit einen ersten Strömungsweg (306a, 406a) der zumindest zwei Strömungswege (306, 306a, 406, 406a) verschließt und
eine zweite Dichtfläche (332, 433) des einstückigen Schließkörpers (326, 409) an einem Dichtsitz (307, 407) in dem Gehäuse (301, 401) abstützt und somit einen zweiten Strömungsweg (306, 406) der zumindest zwei Strömungswege (306, 306a, 406, 406a) verschließt, wobei die Magnetspule ansteuerbar und erregbar ist, den magnetischen Anker zu bewegen um einen der zumindest zwei Strömungswege freizugegeben und **dadurch gekennzeichnet, dass** eine Erhöhung der Erregung der Magnetspule zusätzlich einen zweiten der zumindest zwei Strömungswege freigibt.

2. Druckregler (107, 300, 400, 500, 600, 800, 810, 820, 901, 911) nach Anspruch 1, **dadurch gekennzeichnet, dass** die einzelnen Strömungswege der zumindest zwei Strömungswege (306, 306a, 406, 406a) mit unterschiedlichem Querschnitt ausgeführt sind.

3. Druckregler (107, 300, 400, 500, 600, 800, 810, 820, 901, 911) nach Anspruch 1, **dadurch gekennzeichnet, dass** die einzelnen Strömungswege der zumindest zwei Strömungswege (306, 306a, 406, 406a) mit gleichem Querschnitt ausgeführt sind.

4. Druckregler (107, 300, 400, 500, 600, 800, 810, 820, 901, 911) nach einem der vorangegangenen Ansprüche, **dadurch gekennzeichnet, dass** die einzelnen Strömungswege der zumindest zwei Strömungswege (306, 306a, 406, 406a) unabhängig voneinander geöffnet oder verschlossen werden.

5. Druckregler (107, 300, 400, 500, 600, 800, 810, 820, 901, 911) nach einem der Ansprüche 1 bis 3, **dadurch gekennzeichnet, dass** die einzelnen Strömungswege der zumindest zwei Strömungswege (306, 306a, 406, 406a) nicht unabhängig voneinander geöffnet oder verschlossen werden.

6. Druckregler (107, 300, 400, 500, 600, 800, 810, 820, 901, 911) nach einem der vorangegangenen Ansprüche, **dadurch gekennzeichnet, dass** die zumindest zwei Strömungswege (306, 306a, 406, 406a) in einem gemeinsamen Gehäuse (301,401, 507) ausgeführt werden.

7. Druckregler (107, 300, 500, 600, 800, 810, 820, 901, 911) nach einem der vorangegangenen Ansprüche, **dadurch gekennzeichnet, dass** der magnetische Anker (323) der Verschlusseinheit (309) zur Lageänderung des einstückigen Schließkörpers (326) auf einer Hochdruckseite angeordnet ist.

8. Druckregler (107, 400) nach einem der Ansprüche 1 bis 6, **dadurch gekennzeichnet, dass** der magnetische Anker (428) der Verschlusseinheit zur Lageänderung des einstückigen Schließkörpers (409) auf der Niederdruckseite angeordnet ist.

9. Druckregler (107, 300, 500, 600, 800, 810, 820, 901, 911) nach einem der vorangegangenen Ansprüche, **dadurch gekennzeichnet, dass** der einstückige Schließkörper (503) zumindest eine Aufnahme (504) für eine Dichtung (505) aufweist, die sich am Dichtsitz (506) im Gehäuse (507) abstützt und der Anker (508) eine Aufnahme (509) für eine Dichtung (510) aufweist, die sich am einstückigen Schließkörper (503) abstützt.

10. Kraftstoffversorgungsanlage (100) für ein Kraftfahrzeug, umfassend einen Druckregler (107, 300, 400, 500, 600, 800, 810, 820, 901, 911) nach einem der Ansprüche 1 bis 9 einer Regeleinheit (106, 900, 910), über den ein Speicherbehälter (102) der Kraftstoffversorgungsanlage (100) entleert wird.

11. Verfahren zum Schalten eines Druckreglers (107, 300, 500, 600, 800, 810, 820, 901, 911) nach einem der Ansprüche 1 bis 9, wobei eine Verschlusseinheit kontinuierlich geschaltet wird, mit beliebigen Zwischenstellungen zwischen einer Offen- und einer Schließstellung.

## Claims

1. Pressure regulator (107, 300, 400, 500, 600, 800, 810, 820, 901, 911) for a fuel supply apparatus (100), comprising:
at least two flow paths (306, 306a, 406, 406a) between a high-pressure space (303, 403, 501) and a low-pressure space (305, 405, 502),
the pressure regulator further comprising an electromagnetic device for opening and closing the at least two flow paths (306, 306a, 406, 406a), which includes a magnetic coil (321, 427) and a closure unit (309, 415) for screwing into a housing (301, 401) with a magnetic anchor (323, 428), wherein, in a de-energized and unexcited state of the magnetic coil (321, 427), a sealing surface (327, 430) of the magnetic anchor (323, 428) is supported on a first sealing surface (328, 431) of a one-piece closing body (326, 409) and thus closes a first flow path (306a, 406a) of the at least two flow paths (306, 306a, 406, 406a), and
a second sealing surface (332, 433) of said one-piece closure body (326, 409) is supported on a sealing seat (307, 407) in said housing (301, 401) and thus closes a second flow path (306, 406) of said at least two flow paths (306, 306a, 406, 406a),
wherein said magnetic coil is controllable and energizable to move said magnetic anchor to unblock one of said at least two flow paths, and
**characterized in that** an increase in energization of the magnetic coil additionally clears a second of the at least two flow paths.

2. Pressure regulator (107, 300, 400, 500, 600, 800, 810, 820, 901, 911) according to claim 1, **characterized in that** the individual flow paths of the at least two flow paths (306, 306a, 406, 406a) have different cross sections.

3. Pressure regulator (107, 300, 400, 500, 600, 800, 810, 820, 901, 911) according to claim 1, **characterized in that** the individual flow paths of the at least two flow paths (306, 306a, 406, 406a) have the same cross section.

4. Pressure regulator (107, 300, 400, 500, 600, 800, 810, 820, 901, 911) according to one of the preceding claims, **characterized in that** the individual flow paths of the at least two flow paths (306, 306a, 406, 406a) are opened or closed independently of one another.

5. Pressure regulator (107, 300, 400, 500, 600, 800, 810, 820, 901, 911) according to one of the claims 1 to 3, **characterized in that** the individual flow paths of the at least two flow paths (306, 306a, 406, 406a) are not opened or closed independently of one another.

6. Pressure regulator (107, 300, 400, 500, 600, 800, 810, 820, 901, 911) according to one of the preceding claims, **characterized in that** the at least two flow paths (306, 306a, 406, 406a) are in a common housing (301, 401, 507).

7. Pressure regulator (107, 300, 500, 600, 800, 810, 820, 901, 911) according to one of the preceding claims, **characterized in that** the magnetic anchor (323) of the closing unit (309) for changing the position of the one-piece closing body (326) is arranged on a high-pressure side.

8. Pressure regulator (107, 400) according to one of claims 1 to 6, **characterized in that** the magnetic anchor (428) of the closing unit for changing the position of the one-piece closing body (409) is arranged on the low-pressure side.

9. Pressure regulator (107, 300, 500, 600, 800, 810, 820, 901, 911) according to one of the preceding claims, **characterized in that** the one-piece closing body (503) has at least one receptacle (504) for a seal (505) which is supported at the seal seat (506) in the housing (507), and the anchor (508) has a receptacle (509) for a seal (510) which is supported on the one-piece closing body (503).

10. Fuel supply apparatus (100) for a motor vehicle, comprising a pressure regulator (107, 300, 400, 500, 600, 800, 810, 820, 901, 911) according to any one of claims 1 to 9 of a control unit (106, 900, 910), via which a storage tank (102) of the fuel supply apparatus (100) is emptied.

11. Method of switching a pressure regulator (107, 300, 500, 600, 800, 810, 820, 901, 911) according to any one of claims 1 to 9, wherein a closure unit is switched continuously, with any intermediate position between an open position and a closed position.

## Revendications

1. Régulateur de pression (107, 300, 400, 500, 600, 800, 810, 820, 901, 911) pour une installation (100) d'alimentation en carburant, comprenant :
au moins deux voies d'écoulement (306, 306a, 406, 406a) entre une chambre haute pression (303, 403, 501) et une chambre basse pression (305, 405, 502), le régulateur de pression comprenant en outre
un dispositif électromagnétique pour l'ouverture et la fermeture des au moins deux voies d'écoulement (306, 306a, 406, 406a), qui comprend une bobine magnétique (321, 427) ainsi qu'une unité d'obturation (309, 415) pour vissage dans un boîtier (301, 401) ayant une armature magnétique (323, 428), et dans lequel, dans un état sans courant et non excité de la bobine magnétique (321, 427),
une surface d'étanchéité (327, 430) de l'armature magnétique (323, 428) s'appuie contre une première surface d'étanchéité (328, 431) d'un corps de fermeture monobloc (326, 409) et ainsi obture une première voie d'écoulement (306a, 406a) des au moins deux voies d'écoulement (306, 306a, 406, 406a), et
une deuxième surface d'étanchéité (332, 433) du corps de fermeture monobloc (326, 409) s'appuie contre un siège d'étanchéité (307, 407) dans le boîtier (301, 401) et ainsi obture une deuxième voie d'écoulement (306, 406) des au moins deux voies d'écoulement (306, 306a, 406, 406a), la bobine magnétique pouvant être actionnée et excitée pour déplacer l'armature magnétique et libérer l'une des au moins deux voies d'écoulement, et **caractérisé en ce qu'**une augmentation de l'excitation de la bobine magnétique libère en outre une deuxième des au moins deux voies d'écoulement.

2. Régulateur de pression (107, 300, 400, 500, 600, 800, 810, 820, 901, 911) selon la revendication 1, **caractérisé en ce que** les voies d'écoulement individuelles des au moins deux voies d'écoulement (306, 306a, 406, 406a) sont réalisées avec des sections transversales différentes.

3. Régulateur de pression (107, 300, 400, 500, 600, 800, 810, 820, 901, 911) selon la revendication 1, **caractérisé en ce que** les voies d'écoulement individuelles des au moins deux voies d'écoulement (306, 306a, 406, 406a) sont réalisées avec des sections transversales identiques.

4. Régulateur de pression (107, 300, 400, 500, 600, 800, 810, 820, 901, 911) selon l'une des revendications précédentes, **caractérisé en ce que** les voies d'écoulement individuelles des au moins deux voies d'écoulement (306, 306a, 406, 406a) sont ouvertes ou fermées indépendamment l'une de l'autre.

5. Régulateur de pression (107, 300, 400, 500, 600, 800, 810, 820, 901, 911) selon l'une des revendications 1 à 3, **caractérisé en ce que** les voies d'écoulement individuelles des au moins deux voies d'écoulement (306, 306a, 406, 406a) ne sont pas ouvertes ou fermées indépendamment l'une de l'autre.

6. Régulateur de pression (107, 300, 400, 500, 600, 800, 810, 820, 901, 911) selon l'une des revendications précédentes, **caractérisé en ce que** les au moins deux voies d'écoulement (306, 306a, 406, 406a) sont réalisées dans un boîtier commun (301, 401, 507).

7. Régulateur de pression (107, 300, 400, 500, 600, 800, 810, 820, 901, 911) selon l'une des revendications précédentes, **caractérisé en ce que** l'armature magnétique (323) de l'unité d'obturation (309) est, pour modifier la position du corps de fermeture monobloc (306), disposée sur un côté haute pression.

8. Régulateur de pression (107, 400) selon l'une des revendications 1 à 6, **caractérisé en ce que** l'armature magnétique (428) de l'unité d'obturation est, pour modifier la position du corps de fermeture monobloc (409), disposée sur le côté basse pression.

9. Régulateur de pression (107, 300, 400, 500, 600, 800, 810, 820, 901, 911) selon l'une des revendications précédentes, **caractérisé en ce que** le corps de fermeture monobloc (503) comprend au moins un évidement (504) pour une garniture d'étanchéité (505), qui s'appuie contre le siège d'étanchéité (506) dans le boîtier (507), et l'armature (508) comprend un évidement (509) pour une garniture d'étanchéité (510), qui s'appuie contre le corps de fermeture monobloc (503).

10. Installation (100) d'alimentation en carburant pour un véhicule à moteur, comprenant un régulateur de pression (107, 300, 400, 500, 600, 800, 810, 820, 901, 911) selon l'une des revendications 1 à 9 d'une unité de régulation (106, 900, 910), par l'intermédiaire duquel un réservoir (102) de l'installation (100) d'alimentation en carburant est vidangé.

11. Procédé pour la commande d'un régulateur de pression (107, 300, 400, 500, 600, 800, 810, 820, 901, 911) selon l'une des revendications 1 à 9, dans lequel une unité d'obturation est commandée en continu, avec des positions intermédiaires quelconques entre une position ouverte et une position fermée.
